# EUROPEAN PATENT APPLICATION

(11) **EP 2 899 934 A1**
(43) Date of publication of application: **29.07.2015**
(21) Application number: 13839387.1
(22) Date of filing: 05.08.2013
(51) Int. Cl.: H04L 12/801

(54) **TRAFFIC GROOMING METHOD AND SYSTEM**

(30) Priority: 18.09.2012 CN 201210346509
(71) Applicant: ZTE Corporation, Shenzhen, Guangdong 518057 (CN)
(72) Inventor: WANG, Dajiang, Shenzhen Guangdong 518057 (CN); LU, Gang, Shenzhen Guangdong 518057 (CN); HUANG, Shanguo, Shenzhen Guangdong 518057 (CN); ZHANG, Jie, Shenzhen Guangdong 518057 (CN)
(74) Representative: Gevers Patents
(86) International application number: PCT/CN2013/080821
(87) International publication number: WO 2014/044085

(57) **Abstract**

A method and a system for implementing traffic grooming are described. The method includes that: a link with a minimum number of services is determined as a link to be optimized, and the services to be optimized on the link to be optimized are reestablished onto a link with the minimum residual bandwidth. The traffic grooming technology of the disclosure causes less impacts on the existing network, thus reducing the number of impacted services during service optimization, reducing network risks and causing as less as possible impacts on transmission of network services. In addition, because the link which occupies a smaller bandwidth can be released, and the services are reestablished on the link which occupies a larger bandwidth, the bandwidth utilization rate of the link is improved, and therefore energy is saved.

## Description

### TECHNICAL FIELD

The disclosure relates to the field of communications, and in particular to a method and system for implementing traffic grooming.

### BACKGROUND

At present, for saving energy, during traffic grooming, a link with the maximum residual bandwidth is typically selected for traffic grooming; secondly, the service that is last established is selected for optimization based on the principle of "last establishment, first release" (the last established service is released preferentially); and finally, the shortest path is selected for the service to be optimized, and the service is re-deployed.

Accordingly, in the related art, a link to be optimized is selected based on the standard of the most residual bandwidth. If the link occupies the minimum bandwidth but is constituted by a plurality of small services, during optimization, the services need to be released and established for multiple times. This causes great latent risks for security of the entire network. In addition, during selection of the services to be optimized, the related art employs the principle of "last establishment, first release". If the last established service occupies a larger bandwidth and no sufficient residual bandwidth is available for transmission of the service during re-computation of a path for the service, the optimization may fail.

### SUMMARY

In view of this, embodiments of the disclosure is mainly intended to provide a method and system for implementing traffic grooming, so as to reduce the number of impacted services during service optimization and improve the utilization rate of bandwidth as much as possible.

To this end, the technical solutions of the disclosure are implemented as follows:
A method for implementing traffic grooming is provided, which includes: determining a link with a minimum number of services as a link to be optimized, and reestablishing the services to be optimized on the link to be optimized onto a link with the minimum residual bandwidth.

Wherein, the determining a link with a minimum number of services as a link to be optimized may include:
acquiring service and network topology information, and defining, according to the acquired service and network topology information, the link with the minimum number of services as the link to be optimized; when there are a plurality of links with the minimum number of services, selecting a link with the maximum residual bandwidth as the link to be optimized; when there are a plurality of links with the maximum residual bandwidth, selecting a link with the shortest path as the link to be optimized; when there are a plurality of links with the shortest path, selecting any one of the plurality of links as the link to be optimized.

Wherein, the service to be optimized may be a service which occupies a minimum bandwidth on the link to be optimized, or any one service on the link to be optimized.

Wherein, during reestablishing the services to be optimized, computing more than one shortest path for reestablishment for the services to be optimized.

Wherein, the method may further include: after reestablishing all the services to be optimized on the link to be optimized, disabling the link to be optimized.

A system for implementing traffic grooming is provided, which includes a to-be-optimized link decision making unit and a to-be-optimized service reestablishing unit; wherein
the to-be-optimized link decision making unit is configured to determine a link with a minimum number of services as a link to be optimized, and notify details of the link to be optimized to the to-be-optimized service reestablishing unit; and
the to-be-optimized service reestablishing unit is configured to reestablish the services to be optimized on the link to be optimized onto a link with the minimum residual bandwidth.

Wherein, the to-be-optimized link decision making unit may be configured, when determining a link with a minimum number of services as a link to be optimized,
to acquire service and network topology information, and to define, according to the acquired service and network topology information, the link with the minimum number of services as the link to be optimized; when there are a plurality of links with the minimum number of services, to select a link with the maximum residual bandwidth as the link to be optimized; when there are a plurality of links with the maximum residual bandwidth, to select a link with the shortest path as the link to be optimized; and when there are a plurality of links with the shortest path, to select any one of the plurality of links as the link to be optimized.

Wherein, the service to be optimized may be a service which occupies a minimum bandwidth on the link to be optimized, or any one service on the link to be optimized;
when the to-be-optimized service is the service which occupies the minimum bandwidth on the link to be optimized, the system may further include: a to-be-optimized service decision making unit, which is configured to determine a service which occupies the minimum bandwidth on the link to be optimized as the service to be optimized on the link to be optimized, and to notify details thereof to the to-be-optimized service reestablishing unit.

Wherein, the to-be-optimized service reestablishing unit may be configured, when reestablishing the services to be optimized, to compute more than one shortest path for reestablishment for the services to be optimized.

Wherein, the to-be-optimized service reestablishing unit may be further configured to disable the link to be optimized after reestablishing all the services to be optimized on the link to be optimized.

The traffic grooming technology of the embodiments of the disclosure causes less impacts on the existing network, thus reducing the number of impacted services during service optimization, reducing network risks and causing as less as possible impacts on transmission of network services. In addition, because the link which occupies a smaller bandwidth can be released, and the services are reestablished on the link which occupies a larger bandwidth, the bandwidth utilization rate of the link is improved, and therefore energy is saved.

### BRIEF DESCRIPTION OF THE DRAWINGS

Fig. 1 is a flowchart of traffic grooming based on global network optimization according to an embodiment of the disclosure;
Fig. 2 is a topology of an example of traffic grooming according to an embodiment of the disclosure;
Fig. 3 is a brief flowchart of implementing traffic grooming according to an embodiment of the disclosure; and
Fig. 4 is a system diagram of traffic grooming according to an embodiment of the disclosure.

### DETAILED DESCRIPTION

During traffic grooming for a network, a link with a minimum number of services may be selected for optimization, and services to be optimized on the link are reestablished on a link with the minimum residual bandwidth. In this way, less impact is caused to the existing services, and the residual resources are fully utilized.

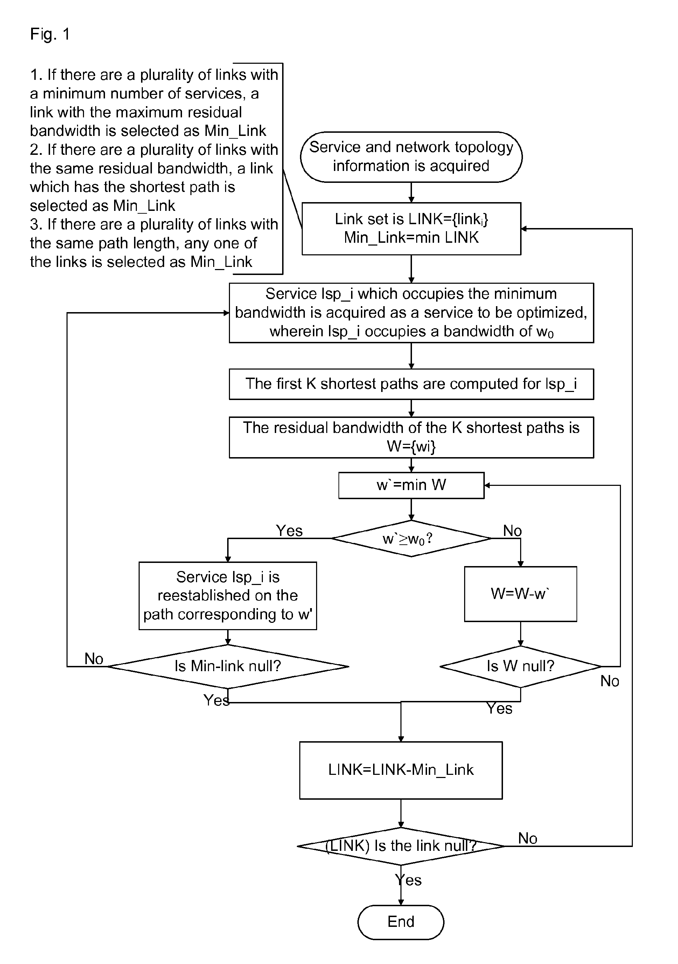

To be specific, operations as illustrated in Fig. 1 may be performed.

Firstly, service and network topology information is acquired; according to the acquired service and network topology information, a link with the minimum number of services is defined as the link to be optimized Min_link; if there are a plurality of links with the minimum number of services, a link with the maximum residual bandwidth is selected as Min_link; if there are a plurality of links with the maximum residual bandwidth, a link with the shortest path is selected as Min_link; and if there are a plurality of links with the shortest path, any of the plurality of links is selected as Min_link.

On the basis that the link to be optimized is selected, a service which occupies the minimum bandwidth on the link to be optimized is acquired as the service to be optimized, wherein the bandwidth occupied by the service is Wo; subsequently, the first K (more than 1) shortest paths are computed for the services to be optimized, wherein the residual bandwidth of the K shortest paths is Wi, which constitute a set W = {Wi}. The minimum value W' is selected from the set W. If W' is sufficient for the use of the services to be optimized, the services are transmitted on the path corresponding to W'; otherwise, a larger W' is selected to accommodate the need of transmitting the services. Nevertheless, if the larger W' is insufficient for the use of the services to be optimized, it is continuously judged, by using the above method, whether the larger W' accommodates the need of transmitting the services.

Upon completion of the reestablishment of the services to be optimized, it is judged whether Min_link is null, and the optimization is terminated if Min_link is null; otherwise, the services are continuously optimized by using the above method. In addition, upon completion of the optimization of all the services to be optimized on the link to be optimized, the link corresponding to Min_link in the topology may be disabled, that is, the link to be optimized is disabled.

The above operations are repeatedly performed until all links in the topology are optimized.

In practice, in addition to using the service which occupies the minimum bandwidth on the link to be optimized as the link to be optimized, no specific selection or judgment may be made; instead, any service on the link to be optimized may be used as the service to be optimized.

Accordingly, for a minimum number of impacted services, during selection of the link to be optimized, a link with a minimum number of services may be selected; for a high link bandwidth utilization rate, a service with the minimum bandwidth on the link to be optimized is used as the service to be optimized. In addition, during re-computation of paths for the services, the shortest path may not necessarily be computed directly; instead, the first K shortest paths may be computed, and a path with the minimum residual bandwidth may be selected from the K shortest paths for service reestablishment. As such, the link may be fully utilized.

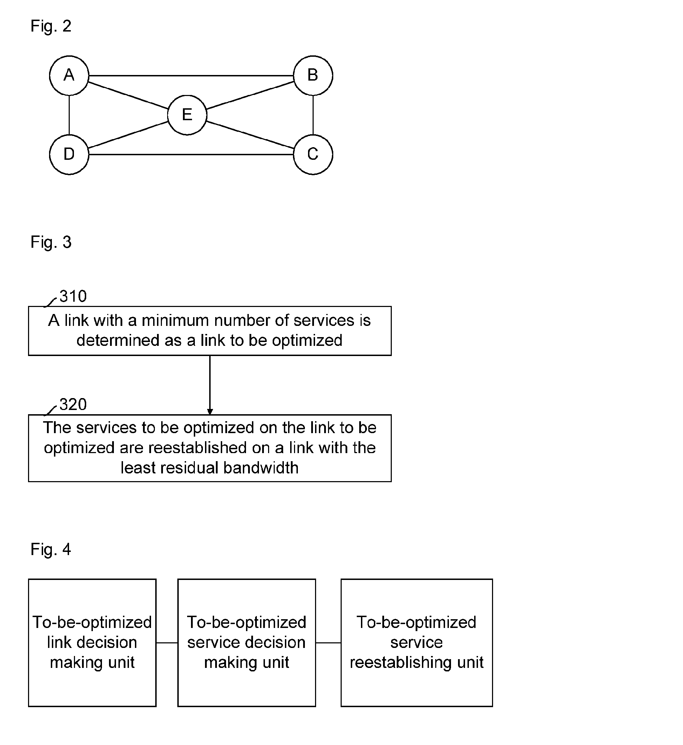

In practice, referring to Fig. 2, the services (the total bandwidth of each link is 10) deployed in Fig. 2 are as listed in Table 1.

**Table 1**

| Service path | Occupied bandwidth | Service path | Occupied bandwidth |
|---|---|---|---|
| A->B | 2 | A->D | 2 |
| A->B | 2 | A->E | 5 |
| B->C | 2 | E->C | 2 |
| B->C | 2 | E->C | 5 |
| B->C | 2 | B->E | 5 |
| C->D | 2 | B->E | 2 |
| C->D | 5 | E->D | 2 |
| | | E->D | 5 |

According to the description of Fig. 1, link AD with a minimum number of services is selected for optimization, which occupies a bandwidth of 2. Three (K = 3) paths with a source of A and a sink of D are computed, respectively, A->E->D, A->E->C->D, and A->B->E->D. The minimum value of the residual bandwidth of path A->E->D is 3, the minimum value of the residual bandwidth of path A->E->C->D is 3, and the minimum value of the residual bandwidth of path A->B->E->D is 3. Path A->E->D which is the shortest is selected for transmitting the services to be optimized. In this case, the bandwidth occupied by link AE is 7, and the bandwidth occupied by link ED is 9. Link AD is successfully optimized. Therefore, link AD will not be considered in the subsequent path establishment in the topology.

When the services deployed in Fig. 2 are updated to those listed in Table 2:

**Table 2**

| Service path | Occupied bandwidth | Service path | Occupied bandwidth |
|---|---|---|---|
| A->B | 2 | A->E->D | 2 |
| A->B | 2 | A->E | 5 |
| B->C | 2 | E->C | 2 |
| B->C | 2 | E->C | 5 |
| B->C | 2 | B->E | 5 |
| C->D | 2 | B->E | 2 |
| C->D | 5 | E->D | 2 |
| | | E->D | 5 |

Links AB, AE, EC, and DC with a minimum number of services are selected for optimization. The number of services on each of these links is 2. However, the residual bandwidth of link AB is 6, and the residual bandwidth of the other links is 3. The services on the link with the source A and the sink B with the larger residual bandwidth are selected for optimization. The first three shortest paths are computed for the link with the source A and the sink B, respectively A->E->B, A->E->C->B, and A->E->D->C->B. The minimum values of the residual bandwidths of path A->E->B, path A->E->C->B, and path A->E->D->C->B are respectively 3, 3, and 3. The shortest path A->E->B is selected for optimization. In this case, the bandwidth occupied by link AE is 9, and the bandwidth occupied by link BE is 9. The first three shortest paths are computed for the link with the source A and the sink B, respectively A->E->B, A->E->C->B, and A->E->D->C->B.

The minimum values of the residual bandwidths of path A->E->B, path A->E->C->B, and path A->E->D->C->B are respectively 1, 1, and 1. Since the residual bandwidth is insufficient for transmission of the services to be optimized, the optimization is complete.

With reference to the above description, the operations in the embodiments of the disclosure for implementing traffic grooming may be illustrated as the processes in Fig. 3. The process includes the following steps:

Step 310: A link with a minimum number of services is determined as a link to be optimized.

Step 320: The services to be optimized on the link to be optimized are reestablished on a link with the minimum residual bandwidth.

To ensure successful implementation of the above description and operations, configuration as illustrated in Fig. 4 is provided. Referring to Fig. 4, Fig. 4 is a system diagram of traffic grooming according to an embodiment of the disclosure. The system includes a to-be-optimized link decision making unit and a to-be-optimized service reestablishing unit that are connected to each other, and may further include a to-be-optimized service decision making unit connected to the to-be-optimized link decision making unit.

The to-be-optimized link decision making unit determines a link with a minimum number of services as a link to be optimized, and notifies details of the link to be optimized to the to-be-optimized service reestablishing unit. The to-be-optimized service reestablishing unit reestablishes the services to be optimized on the link to be optimized on a link with the minimum residual bandwidth. Nevertheless, if the to-be-optimized service decision making unit determines the service which occupies the minimum bandwidth on the link to be optimized as the service to be optimized on the link to be optimized, details of such circumstance are notified to the to-be-optimized service reestablishing unit for service reestablishment.

In conclusion, regardless of whether the method and the system, the traffic grooming technology of the disclosure causes less impacts on the existing network, thus reducing the number of impacted services during service optimization, reducing network risks and causing as less as possible impacts on transmission of network services. In addition, because the link which occupies a smaller bandwidth can be released, and the services are reestablished on the link which occupies a larger bandwidth, the bandwidth utilization rate of the link is improved, and therefore energy is saved.

Detailed above are merely preferred embodiments of the disclosure, but are not intended to limit the protection scope of the disclosure.

### INDUSTRIAL APPLICABILITY

With the method and system for implementing traffic grooming according to the embodiments of the disclosure, a link with a minimum number of services is determined as a link to be optimized, and the services to be optimized on the link to be optimized are reestablished on a link with the minimum residual bandwidth. The traffic grooming technology of the embodiments of the disclosure causes less impacts on the existing network, thus reducing the number of impacted services during service optimization, reducing network risks and causing as less as possible impacts on transmission of network services. In addition, because the link which occupies a smaller bandwidth can be released, and the services are reestablished on the link which occupies a larger bandwidth, the bandwidth utilization rate of the link is improved, and therefore energy is saved.

## Claims

1. A method for implementing traffic grooming, comprising:
determining a link with a minimum number of services as a link to be optimized, and reestablishing the services to be optimized on the link to be optimized onto a link with the minimum residual bandwidth.

2. The method according to claim 1, wherein the determining a link with a minimum number of services as a link to be optimized comprises:
acquiring service and network topology information, and defining, according to the acquired service and network topology information, the link with the minimum number of services as the link to be optimized; when there are a plurality of links with the minimum number of services, selecting a link with the maximum residual bandwidth as the link to be optimized; when there are a plurality of links with the maximum residual bandwidth, selecting a link with the shortest path as the link to be optimized; when there are a plurality of links with the shortest path, selecting any one of the plurality of links as the link to be optimized.

3. The method according to claim 1, wherein the service to be optimized is a service which occupies a minimum bandwidth on the link to be optimized, or any one service on the link to be optimized.

4. The method according to any one of claims 1 to 3, wherein during reestablishing the services to be optimized, computing more than one shortest path for reestablishment for the services to be optimized.

5. The method according to claim 1, further comprising: after reestablishing all the services to be optimized on the link to be optimized, disabling the link to be optimized.

6. A system for implementing traffic grooming, comprising a to-be-optimized link decision making unit and a to-be-optimized service reestablishing unit; wherein
the to-be-optimized link decision making unit is configured to determine a link with a minimum number of services as a link to be optimized, and notify details of the link to be optimized to the to-be-optimized service reestablishing unit; and
the to-be-optimized service reestablishing unit is configured to reestablish the services to be optimized on the link to be optimized onto a link with the minimum residual bandwidth.

7. The system according to claim 6, wherein the to-be-optimized link decision making unit is configured, when determining a link with a minimum number of services as a link to be optimized,
to acquire service and network topology information, and to define, according to the acquired service and network topology information, the link with the minimum number of services as the link to be optimized; when there are a plurality of links with the minimum number of services, to select a link with the maximum residual bandwidth as the link to be optimized; when there are a plurality of links with the maximum residual bandwidth, to select a link with the shortest path as the link to be optimized; and when there are a plurality of links with the shortest path, to select any one of the plurality of links as the link to be optimized.

8. The system according to claim 6, wherein
the service to be optimized is a service which occupies a minimum bandwidth on the link to be optimized, or any one service on the link to be optimized;
when the to-be-optimized service is the service which occupies the minimum bandwidth on the link to be optimized, further comprising: a to-be-optimized service decision making unit, which is configured to determine a service which occupies the minimum bandwidth on the link to be optimized as the service to be optimized on the link to be optimized, and to notify details thereof to the to-be-optimized service reestablishing unit.

9. The system according to any one of claims 6 to 8, wherein the to-be-optimized service reestablishing unit is configured, when reestablishing the services to be optimized, to compute more than one shortest path for reestablishment for the services to be optimized.

10. The system according to claim 6, wherein the to-be-optimized service reestablishing unit is further configured to disable the link to be optimized after reestablishing all the services to be optimized on the link to be optimized.
